# EUROPEAN PATENT SPECIFICATION

(11) **EP 1 553 144 B1**
(45) Date of publication and mention of the grant of the patent: **10.08.2016**
(21) Application number: 04029767.3
(22) Date of filing: 16.12.2004
(51) Int. Cl.: C09C 1/62, C09C 1/64, C09C 1/00

(54) **Colored interference pigments having metallic luster, preparing method and use of same**
Farbige Interferenzpigmente mit metallischem Glanz, eine Methode zu ihrer Herstellung und ihre Verwendung
Pigments d'interférence colorés ayant un lustre métallique, méthode de leur préparation et leur utilisation

(30) Priority: 09.01.2004 JP 2004004811
(43) Date of publication of application: 13.07.2005
(73) Proprietor: Merck Patent GmbH, 64293 Darmstadt (DE)
(72) Inventor: Bangyin Li, Jotoh Mansion B-303, Fukushima-ken 970-8026 (JP); Nobuaki Nakamura,, Fukushima Pref. 971-8172 (JP); Katsuhisa Nitta, Iwaki-shi 971-8152 (JP)

(56) References cited:
- WO-A-03/014228
- DE-A1- 19 836 810

## Description

The present invention relates to novel colored interference pigments having metallic luster, the preparing method and the use of same.

Highly anti-corrosive thin platelet-like metal pigments having high anti-corrosive and good dispersibility without damaging the original surface smoothness of thin platelet-like metal substrate such as aluminum flake etc. are well known (for example, patent document 1). The corrosion resistance for highly anti-corrosive thin platelet-like metal substrate pigments is achieved in that after treating the surface of thin platelet-like metal substrate with phosphoric acid compounds and/or boric acid compounds (the first layer) in non-aqueous system, thereafter a hydrated metal oxide is coated thereon (the second layer) by sol-gel method in non-aqueous system. Further, colored interference pigments having metallic luster are obtained by coating one or more hydrated metal oxide layers (the third layer or more) onto the outer layer of highly anti - corrosive thin platelet-like metal pigments used as a base by wet process method in aqueous system (paragraph [0034] of patent document 1).

However, when a hydrated iron oxide is coated directly onto such "highly anti-corrosive thin platelet-like metal pigments" as the base for aiming at a reddish color by just applying the conventional wet process method, the denseness of the hydrated iron oxide layer is not sufficient, and therefore it is not possible to achieve colored interference pigments having metallic luster with a reddish color having high luster, high coloration, strong and improved interference color and high chromaticity.

Further, patent document 2 discloses luster pigments based on multiply coated platelet like metallic substrates having color flop with one layer packet comprising, (A) a first layer having lower refractive index (not greater than 1.8), (B) a second selectively absorbing layer having high refractive index (not less than 2.0), and if desired, additionally (C) a third layer different than the layer (B) underneath. The formation of multiply layer by combining the first layer (A) having lower refractive index in said luster pigments with the outer layer (B) having high refractive index, can increase the reflection at the multi-layer boundary and improve the interference color (non-patent document 1, patent document 3, patent document 4, and patent document 5). There is description of aluminium oxide or silicon dioxide as an example of the first layer (A), and is alsodescriptionof high refractive index materials consisting of iron (III) oxide, chromium (III) oxide, titanium (III) oxide, etc. for the second layer (B). Further, as the coating method, the CVD process and the process by wet-chemical hydrolysis of an organic metal compound in an organic solvent system are described; however, there is no description on the reaction in an aqueous system which can be easily performed (herein defined as "wet-process method"), and multiply alternate coated layers containing a selectively absorbing layer were formed directly on thin platelet-like metal particles without an intermediate. binder layer, to generate the color by interference. The CVD process is not expected to achieve the homogeneity of the coating compared with a wet-process method.

Patent document 6 discloses multi-layer coated pigments based on thin platelet-like metal produced by coating the metal pigments with the amorphous glassy layer consisting of SiO, B₂O₃ and/or phosphate, or mixtures thereof. However, when aluminum, which can be easily oxidized, is used as thin platelet-like metal substrate, hydrogen is easily generated since the coating process is the direct reaction in aqueous system, and thereby the smoothness of the metal surface will be damaged, resulting in irregular reflection from the boundary between the metal and the "amorphous glassy" layer or losing metallic luster. Thus it is difficult to achieve the desired coloration with the lustrous interference color. Moreover, the generation of hydrogen may cause a potential hazard in practical applications.

For example, patent document 7 discloses silica coated aluminum pigment which exhibits corrosion resistance forming the silica layer on the surface of aluminum pigment with silica-containing compound. The layer formed is a single layer containing phosphorous in the silica coated layer (described in paragraph [002]); however, there is no description concerning the interference color having metallic luster with a reddish color by coating hydrated iron oxide on the outer layer.

Patent Document 1: JP, A, 2003-41150
Patent Document 2: JP, A, 08-209024
Patent Document 3: JP, A, 03-120351
Patent Document 4: JP, A, 06-93206
Patent Document 5: JP, A, 07-246366
Patent Document 6: JP, A, 2002-522618
Patent Document 7: JP, A, 2002-88274
Non-patent Document: Yamada K., "Knowledge inoptics", published by Tokyo Denki Daigaku Press, 1st version, pp323 to 331 (in Japanese).

Accordingly, an object of the present invention is to provide colored interference pigments having metallic luster with a reddish color in which the adhesion and denseness of hydrated iron oxide coated layer formed on the outer layer of a thin platelet-like metal substrate having a layer of an anti-corrosive treatment in a non-aqueous system is improved to achieve high luster and high coloration (chromaticity).

In order to solve the above problems; the inventors of the present invention have carried out eager investigations and found that coating a special intermediate binder layer right on the surface of the thin platelet-like metal substrate having a layer of an anti-corrosive treatment in a non-aqueous system is able to surprisingly improve the adhesion and denseness of the hydrated iron oxide coated layer formed further outside thereof so that a reddish color with high luster and high coloration (chromaticity) is achieved, whereupon the present invention has been accomplished.

Thus, the present invention relates to colored interference pigments having metallic luster comprising, on the surface of a thin platelet-like metal substrate, a layer of an anti-corrosive treatment in a non-aqueous system, and, thereon
(1) an intermediate binder layer comprising hydrated tin oxide (first layer) obtained by the hydrolysis of a water soluble tin salt; and thereon,
(2) a hydrated iron oxide layer (second layer),
   wherein the layer of an anti-corrosive treatment in a non-aqueous system is ahydratedmetal oxide layer obtained from the following steps: Treating the surface of the thin platelet-like metal substrate with phosphoric acids compounds and/or boric acids compounds, followed by coating one or more hydrated metal oxide layers of one or more metals selected from the group consisting of silicon, aluminum, zirconium and titanium by the sol-gel method.

The present invention further relates to the above-mentioned colored interference pigments having metallic luster, wherein the metals of the hydrated metal oxide in said hydrated metal oxide layer are silicon and/or aluminum.

The present invention further relates to the above-mentioned colored interference pigments having metallic luster, wherein the metal of the hydrated metal oxide in said hydrated metal oxide layer is silicon.

The present invention also relates to the above-mentioned colored interference pigments having metallic luster, wherein the amount of hydrated tin oxide in the intermediate binder layer (the first layer) is not less than the amount which is necessary to form a monolayer of hydrated tinoxide on the thinplatelet-like metal substrate having a layer of an anti-corrosive treatment in a non-aqueous system.

The present invention further relates to the above-mentioned colored interference pigments having metallic luster, wherein the amount of hydrated tin oxide in the intermediate binder layer (the first layer) is 0.0008g to 0.3g as metal oxide (SnO₂) per unit surface area (m²) of the thin platelet-likemetal substrate having a layer of an anti-corrosive treatment in a non-aqueous system.

The present invention also relates to the above-mentioned colored interference pigments having metallic luster, wherein the amount of hydrated iron oxide in the hydrated iron oxide layer (the second layer) is 0.01g to 1.0g as metal oxide (Fe₂O₃) per unit surface area (m²) of the thin platelet-like metal substrate having a layer of an anti-corrosive treatment in a non-aqueous system.

The present invention further relates to a method for preparing colored interference pigments having metallic luster as described above, comprising the following steps:
- Dispersing/suspending thin platelet-like metal substrate particles having a layer of an anti -corrosive treatment in a non-aqueous system in water,
- Adding simultaneously an aqueous solution of a water soluble tin salt and a basic aqueous solution to the dispersion/suspension while keeping the pH value constant and forming a first layer of a hydrated tin oxide (an intermediate binder layer) on the surface of said thin platelet-like metal substrate having a layer of an anti-corrosive treatment in a non-aqueous system; and further
- Adding simultaneously an aqueous solution of an iron (III) salt and a basic aqueous solution while keeping the pH value constant and forming a hydrated iron oxide layer (the second layer).

The present invention also relates to a composition of resin/oil and pigment comprising a resin component, and/or an oil component, and the colored interference pigments having metallic luster described above.

The present invention also relates to the above-mentioned composition of resin/oil and pigment comprising additively further pigments.

The present invention also relates to the use of the composition of resin/oil and pigment in paints, coated films, painted materials, inks, printed materials, plastics, moldings, or cosmetics.

The present invention further relates toapainted material having at least one painted layer comprising the composition of resin/oil and pigment.

The colored interference pigment having metallic luster of the present invention is one in which thin platelet-like metal substrate having a layer of an anti-corrosive treatment in a non-aqueous solution is coated with an intermediate binder layer consisting of hydrated tin oxide thereon to improve the adhesion and denseness of hydrated iron oxide layer formed outside thereof compared with a case having no intermediate binder layer (hydrated iron oxide layer is directly coated on thin platelet-like metal substrate having a layerof ananti-corrosive treatment), so that a reddish color with high luster and high coloration is achieved. Moreover, since thin platelet-like metal substrate having a layer of a highly anti-corrosive treatment is used during coatings, it is able to achieve homogeneous coatings by utilizing so-called wet-process method in which the procedure is simple and easy to operate.

Hereinafter, the present invention will be explained in more detail together with the preparing method.

The highly anti-corrosive thin platelet-like metal substrate used in the present invention has a layer of an anti-corrosive treatment in a non-aqueous system. The thin platelet-like metal substrates as the core of the above-mentioned highly anti-corrosive thin platelet-like metal substrates are composed of metals and metal alloys.

The thin platelet-like metal substrates used in the present invention have an average particle diameter of 2 to 100 *µ*m and an average thickness of 0.02 to 5 *µ*m, preferably an average particle diameter of 5 to 50 *µ*m and an average thickness of 0.05 to 2*µ*m, and more preferably, they have an average particle diameter of 5 to 30*µ*m and an average thickness of 0.1 to 2*µ*m. Specific examples of flakes include aluminum flakes, titanium flakes, iron flakes, bronze flakes, stainless steel flakes, aluminum bronze flakes, various aluminum alloy flakes, various titanium alloy flakes, and others. Preferred flakes include aluminum flakes, titanium flakes, stainless steel flakes, bronze flakes, etc; and, even more preferred flakes include aluminum flakes (for example, supplied by Silver Line Co. Ltd. , Showa Aluminum Co. Ltd., Toyo Aluminum Co. Ltd., Asahi-Kasei Metals Co. Ltd., Eckart-Werke, etc.), titanium flakes, and stainless steel flakes, etc. of which there is a stable supply commercially available as the brilliant metallic pigments.

Among these, thin platelet-like metal substrates commercially available in various states may be used, such as those substrates that have already been suspended in an organic solvent to prevent the oxidative corrosion caused by the moisture contained in the air (for example, pigment pastes suspended in mineral spirit etc.), those substrates that, for the purpose of leafing or for improving dispersibility, have been treated with different types of surface treatment agents and have beer suspended in an organic solvent and those substrates on whose surface an oxidation protection film (passivation film, i.e. surface oxidized thin-film layer)has been applied beforehand. Regarding the object of the present invention, its effect is brought out particularly by metal flakes having high corrosiveness, as long as the surface is largely free from oxidation, hence the use thereof is preferred. For example, those substrates with high corrosiveness such as aluminum flakes which are available in the market at the state of suspension in an organic solvent before being handled and those substrates which have been treated with different surface treatment agents and have been suspended in an organic solvent are particularly recommended for use in the present invention. It is alsopossible to use thinplatelet-like metal substrates and thin platelet-like alloy substrates which have been subject beforehand to an anti-corrosive (passivation) treatment.

The metal substrates having a layer of an anti-corrosive treatment in a non-aqueous system used in the present invention include, thin platelet-like metal substrates which are treated on their surface with phosphoric acid compounds and/or boric acid compounds, and are further coated with one or more hydrated metal oxide layers of one or more metals selected from the group consisting of silicon, aluminum, zirconium, and titanium by sol-gel method such as, for example, described in patent document 1 (JP, A, 2003-41150). Considering their good surface smoothness, dispersibility and surface inherent metallic luster, good adhesion of the intermediate binder layer and the hydrated iron oxide layer formed further outside thereof according to the present invention, the above-mentioned anti-corrosive thin platelet-like metal substrates comprising a layer of phosphoric acid compounds and/or boric acid compounds and one or more hydrated metal oxides layer of one or more metals selected from silicon, aluminum etc. by sol-gel method are adopted.

Those treatments of highly anti-corrosive thin platelet-like metal substrates with phosphoric acid compounds and/or boric acid compounds may be carried out in accordance with the description in JP, A, 2003-411150.

The metals used for the hydrated metal oxides layer, which is to be successively formed, may be selected from the group consisting of silicon, aluminum, zirconium, and titanium. Among these, silicon and aluminum are preferred due to their good transparency and low index of refraction. Especially, silicon is preferred because it is easy to handle. The sol-gel method (described in JP, A, 2003-41150) among non-aqueous reactions for coating the second layer of this high anti-corrosive treatment is preferred to maintain the surface smoothness.

In the description of the present specification, for example, thin platelet-like metal treated with phosphoric acid compounds and/or boric acid compounds combined with further hydrated metal oxide layer in non-aqueous system described in JP, A, 2003-41150, is defined as "thin platelet-like metal substrate having a layer of an anti-corrosive treatment in a non-aqueous system", thereon the layer comprising hydrated tin oxide is coated as "intermediate binder layer" (first layer), and the hydrated iron oxide layer, which is an outer layer thereof, is coated as "the second layer." Further, the term "hydrated oxide" used in "hydrated metal oxide" generally refers to, unless otherwise stated, "oxides" , "hydroxides" , "hydrates of oxide" , and "hydrated oxides" of metal, and "mixtures thereof" in the present invention. The term "oxide" in "metal oxide" is also based on the definition for "hydrated oxide" . Moreover, when representing such "hydrated metal oxide" by chemical formula (which is described, for example, in an embodiment, etc.), it is conveniently represented by the form of oxide.

Next, the intermediate binder layer (the first layer) for improving the adhesion and denseness of the second layer will be described.

The intermediate binder layer, which is the closely followed outer layer of the above-mentioned highly anti-corrosive thin platelet-like metal substrate, can be obtained in the following way. A suitable material for the intermediate binder layer (the first layer) is hydrated tin oxide.

The above-mentioned highly anti-corrosive thin platelet-like metal substrate is dispersed in water while keeping the temperature at 60 to 90 °C to be easy to control the homogeneous coated layer, and a tin salt aqueous solution and a basic aqueous solution are simultaneously added to the suspension while keeping the pH constant thereby coating the hydrated tin oxide layer (intermediate binder layer) onto the highly anti-corrosive metal substrate. The pH is preferably less than 4.7. And more preferably, the value of pH of 0.5 to 3.0 may be adopted.

The amount of hydrated tin oxide in the intermediate binder layer (the first layer) for thin platelet-like metal substrate having a layer of an anti-corrosive treatment in a non-aqueous system needs to be a sufficient amount not to cause the underlying base (the layer treated in non-aqueous system) to be exposed. That is, the amount must be over the amount to be necessary to form a monolayer. The amount of hydrated tin oxide per unit area (m²) of thin platelet-like metal substrate having the layer with anti-corrosive treatment in non-aqueous system is appropriately not less than 0.0008g as metal oxide (SnO₂).

specifically, the amount of hydrated tin oxide used in the intermediate binder layer (the first layer) needs to be adjusted appropriately according to the kind, particle size and particle size distribution of thin platelet-like anti corrosive metal substrate. Considering the unit surface area of the highly anti-corrosive metal substrate, of course, the amount is decreased when the particle size is large, and it is necessary to increase the amount when the particle size is small.

The amount of hydrated tin oxide is adjusted to be within the possible range in which the sufficient adhesion and the improvement of denseness of the second layer are achieved and the hue of the interference color can be controlled; thus the amount per unit area (m²) of thin platelet-like metal substrate having a layer of an anti-corrosive treatment in a non-aqueous system is preferably 0 .0008g to 0.3g as metal oxide (SnO₂), more preferably 0.0009g to 0. 2g, and further preferably 0.01g to 0. 1g. For example, when using the highly anti-corrosive substrate (specific surface area of 3.01 m²/g (described in Table 3 of JP, A, 2003-41150)) including metal aluminum as thin platelet-like metal, the suitable amount is 0.001g to 0. 06g per unit area (m²) of the highly anti-corrosive metal substrate.

The aqueous solution of tin salt to be used is water-soluble tin(II) salt or tin(IV) salt. For example, tin(II) chloride, tin(IV) chloride, tin(II) sulfate, tin(II) acetate, tin(II) oxalate etc. are preferred.

Hereinafter, the coating of hydrated iron oxide (the second layer) after forming the above-mentioned intermediate binder layer will be described. In the present invention, though the coatingof hydrated iron oxide (the second layer) onto the surface of the intermediate binder layer (the first layer) may be performed through the vapor deposition method or sol-gel method, it is more preferable to adopt the wet process (see the description in JP, A, 2003-41150 for the definition) in which, in contrast to the vapor deposition method and so-gel method, it has no restrictions on the raw materials and production facilities and it is easy to achieve the homogeneous coated layer, and it is easy to operate a simple process with a wide range of applications.

A definition of the wet process method, as used in the present invention, has been given before, to be more specific, in an aqueous system, the method consists of (1) in the case of neutralizing hydrolysis, selecting the desired water-soluble metal salt (for example, nitrate salt, sulfate salt, chloride, acetate salt, and further metal acid salt, etc.) and the prescribed amount of aqueous solution while separatelypreparing an alkaline aqueous solution (an acidic aqueous solution in the case of metal acid salt), dropping these into the suspension of highly anti-corrosive thin platelet-like metal pigment which is the base obtained beforehand while maintaining a predetermined pH to form a hydrolyzed layer on the surface, thereafter washing, filtering, drying and, if desired, calcining; and (2) in the case of thermal hydrolysis, adding the predetermined amount of the desired water-soluble metal salt to a suspension of highly anti-corrosive thin platelet-like metal pigment which is the base obtained beforehand and by heating, forming a hydrolyzed layer and, thereafter, washing, filtering, drying and, if desired, calcining. Moreover, as a variation of the method by neutralization hydrolysis (1), a method using, instead of the alkaline aqueous solution, urea and acetoamide producing alkalinity through heating,(the so-called "homogeneous precipitation method") can also be mentioned.

The iron (III) salt to be used may be water-soluble salts such as chloride, sulfate, and nitrate. After coating the above-mentioned intermediate binder layer (the first layer), the iron salt aqueous solution is successively added while maintaining the pH constant (not higher than 4) using an alkaline aqueous solution. Specific examples of alkaline aqueous solution used in the present invention include aqueous alkali metal hydroxide solution such as sodium hydroxide,potassium hydroxide etc., aqueous alkali metal carbonate solution such as sodium carbonate, potassium carbonate etc., aqueous alkali metal bicarbonate solution such as sodium bicarbonate, potassium bicarbonate etc., ammonium carbonate, ammonium bicarbonate or an aqueous ammonia solution etc. The amount of hydrated ion oxide is preferably 0.01g to 1.0g as metal oxide (Fe₂O₃) per unit area (m²) of thin platelet-like metal substrate having a layer of an anti-corrosive treatment in a non-aqueous system in order to achieve a reddish color and to improve its chromaticity sufficiently. Therefore, the amount may be appropriately changed depending on the hue and surface smoothness of individual thin platelet-like metal substrate, and the properties of highly anti-corrosive metal substrate obtained and treated in non-aqueous system. The temperature during this coating process is preferably the same as one during the coating of the above-mentioned intermediate binder layer (the first layer) in terms of efficiency. Thus the obtained suspension containing the colored thin platelet-like interference pigments having metallic luster with a reddish color are then filtered and washed, dried, and calcined.

the colored interference pigments having metallic luster with a reddish color obtained according to the present invention, exhibit a reddish body color with an interference color by coating with an intermediate binder layer to improve the adhesion and denseness of the hydrated iron oxide layer (the second layer) coated thereon.

By performing different types of additional surface treatments, the colored interference pigments having metallic luster with a reddish color obtained according to the present invention meet with the quality required for the applications for which these treatments are used. For example, it is possible to carry out treatments for light resistance, water resistance and weather resistance required for applications as automobile paints (for example, according to JP, A, 63-130673, JP, A, 01-292067, etc.), e.g. treatments for high plane orientation properties (leafing) required e.g. in the painting and printing fields (for example, according to JP, A, 2001-106937, JP, A, 11-347084), water-borne treatments for water-borne paints or inks (for example, according to JP, A, 8-283604), silicon treatment for improving dispersibility and hydrogenpolysiloxane treatment for improving hydrophobic and oleophobic properties for applications in the cosmetics field, surface treatments for weld-line prevention when used as resin (for example, accordingtoJP, A, 03-100068, andJP, A, 03-93862), and different treatments for improving dispersibility.

Hereinafter, the use of the colored interference pigments having metallic luster with a reddish color obtained according to the present invention will be described.

The colored interference pigment having metallic luster with a reddish color obtained according to the present invention may be used in compositions which may additionally include further pigments, resin components and/or oil components for various applications such as paints, printing inks, resin moldings, cosmetics, etc. Specific examples of them will be described below. Although not specifically mentioned, "the pigment in the present invention" used in the following examples indicates "the colored interference pigments having metallic luster" including the ones prepared by applying the above-mentioned various treatments.

### Use for paints

Examples of use in paints are organic solvent-type paints, NAD (non-aqueous dispersion) paints, water-borne paints, emulsion paints, colloidal paints and powder coating. The pigment of the present invention can be mixed in a proportion of 1 to 100 wt% with respect to the paint resins as solid parts. A proportion of 1-70 wt% is preferred. A proportion of 1-20 wt% is particularly preferable. For improving the dispersibility, the surface of the pigments in the present invention can be treated with silane coupling agents and titanium coupling agents. Examples of resin components for the paints in the present invention are acrylate resins, alkyd resins, unsaturated polyester resins, amino resins, melamine resins, polyurethane resins, epoxy resins, polyamide resins, phenol resins, cellulose resins, vinyl resins, silicone resins, fluorine resins, etc. These resins may be used alone or in combination of two or more.

In water-borne paint, emulsion-type resins comprising cross-linking resins based on acrylate melamine resin, etc. can be given as examples.

Examples of mixtures and admixtures include further pigments such as organic pigments and inorganic pigments, as well as antisagging agents, viscosity adjusting agents, sedimentation preventers, cross-linking promoters, curing agents, leveling agents, defoaming agents, plasticizers, antiseptic agents, antifungal agents, ultraviolet stabilizers, etc. Examples of further pigments used in combination with the pigments according to the present invent ion are titaniumdioxide; calcium carbonate; clay; talc; barium sulfate; white carbon; chromium oxide; zinc oxide; zinc sulfide; zinc powder; metal powderpigments (such as aluminum flakes, colored aluminum flakes, stainless steel flakes, titanium flakes, etc.); iron black; yellow iron oxide; red iron oxide; chrome yellow; carbon black; molybdate orange; Prussian Blue; ultramarine blue; cadmium type pigments; fluorescent pigments; soluble azo dyes; insoluble azo dyes; condensed azo dyes; phthalocyanine pigments; condensed polycyclic pigments; composite oxide pigments; graphite; mica (such as muscovite, phlogopite, synthetic mica, fluorine tetra silicon mica, etc.); metal oxide coated mica (such as titanium oxide coated mica, titanium dioxide coated mica, (hydrated) iron oxide coated mica, mica coated with iron oxides and titanium oxides, mica coated with lower ordered titanium oxides) ; metal oxide coated graphite (such as titanium dioxide coated graphite, etc.); thin platelet-like alumina; metal oxide coated alumina (such as titanium dioxide coated alumina, iron oxide coated thin platelet-like alumina, Fe₂O₃ coated thin platelet-like alumina, Fe₃O₄ coated thin platelet-like alumina, interference color metal oxide coated thin platelet-like alumina, etc.); micaceous iron oxide (MIO) ; metal oxide coated MIO; metal oxide coated silica flakes and metal oxide coated glass flakes. By combining these and other pigments, novel hues can be obtained and chromaticity properties can be improved. These paints can be applied to wood, plastic, metal sheet plate, glass, ceramic, paper, film, sheets, translucent films of reflectors for LCDs, etc. Examples of uses for paints include automobiles, buildings, marine vessels, electric household appliances, canned goods, industrial equipment, traffic signs, plastics, householdgoods, etc.

Examples of the structure of the coated film in painted materials include, but are not limited to, e.g. a layered structure in the order of: base coat layer, middle coat layer, layer containing the pigments of the present invention and clear layer; or in the order of: base coat layer, middle coat layer containing the pigments of the present invention and clear layer, etc.

Examples of the method for forming the coated film to constitute painted materials include one-coat/one-bake, two-coat/one-bake, two-coat/two bake, three-coat/one-bake, three-coat/two-bake, three-coat/three-bake, etc. Examples of the coating methods include electrostatic coating, spray coating, airless coating, roll coating, dip coating, etc.

### Use for printing inks

Examples of use in printing inks include relief ink, lithographic printing ink, intaglio printing ink, ink for metal plates, radiation curable ink, UV ink, EB ink, flexo ink, screen ink, offset ink, gravure ink, etc. and water-borne inks thereof, etc. The pigments of the present invention can be mixed in a proportion of 1-100 wt% with respect to the resins as solid parts in the ink. A proportion of 1-70 wt% is preferred. A proportion of 1-20 wt% is particularly preferable. Moreover, the surface of the pigments in the present invention can be treated with silane coupling agents and titanium coupling agents, etc. Examples of resin components include e.g. maleic rosin resins, maleic resins, alkyd resins, polyamide resins, phenol resins, petroleum resins, urethane resins, epoxy resins, acrylate resins, butyral resins, melamine resins, epoxy resins, vinyl chloride resins, vinylidene chloride resins, cellulose resins, vinyl resins, unsaturated polyester resins, cellulose resins, etc. These resins may be used alone or in combination of two or more.

Examples of mixtures include further pigments such as organic pigments and inorganic pigments and additives such as varnishes, reducers, compounders, extra varnishes, gelling agents, drying promoters, antioxidants, anti-offsetting agents, lubricants, surface active agents, etc. Further examples include: dripping preventers, viscosity adjusting agents, sedimentation preventers, cross-linking agents, curing agents, leveling agents, defoaming agents, plasticizers, antiseptic agents, antifungal agents, ultraviolet stabilizers, etc.

Examples of further pigments used in combination with the pigments according to the present invention are extender pigments; precipitated barium sulfate; precipitated calcium carbonate; alumina white; magnesium carbonate and white carbon; white pigments such as titanium oxide, white zinc, etc.; black pigments such as carbon black; yellow pigments such as chrome yellow, disazo yellow, Hansa yellow; red pigments such as brilliant carmine 6B, lake red C, permanent red F5R, Rhodamine Lake, etc.; blue pigments such as phthalocyanine blue, Victoria Blue Lake, Prussian Blue; orange pigments such as chrome vermilion, disazo orange; green pigments such as phthalocyanine green, etc.; violet pigments such as methyl violet lake, dioxazine violet, etc.; other pigments such as isoindolinone, benzimidazoline, condensed azo, quinacdrine, etc.; composite oxide pigments; graphite; mica (such as muscovite, phlogopite, synthetic mica, fluorine tetra silicon mica, etc.); metal oxide coatedmica (suchastitaniumoxidecoatedmica, titaniumdioxide coated mica, (hydrated) iron oxide coated mica, mica coated with iron oxides and titanium oxides, mica coated with lower ordered titanium oxides) ; metal oxide coated graphite (such as titanium dioxide coated graphite, etc.), thin platelet-like alumina; metal oxide coated alumina (such as titanium dioxide coated alumina, iron oxide coated thin platelet-like alumina, Fe₂O₃ coated thin platelet-like alumina, Fe₃O₄ coated thin platelet-like alumina, interference color metal oxide coated thinplatelet-like alumina, etc.); MIO; metal oxide coatedMIO; metal oxide coated silica flakes and metal oxide coated glass flakes. These inks can be printed on wood, plastic, metal sheet plate, glass, ceramic, paper, corrugated cardboard, film, sheets, canned goods, translucent films of reflectors for LCDs, etc. When the pigments of the present invention are combined with these pigments, new hues, colors and functions can appear. In particular, an appropriate combination with color travel effect pigments may make the pigments according to the present invention also suitable for preventing the counterfeiting of securities, tickets, travel coupons and passenger tickets, etc.

Moreover, when used in printing inks, it is particularly preferred to perform a high plane orientation treatment (mentioned above) to the pigments in the present invention. Pigments subjected to such a surface treatment can be mixed with various kinds of printing inks and used for offset printing, gravure printing, screen printing, ultraviolet cure printing, relief and lithographic printing. The use of pigments that have been subject to a high plane orientation treatment for inks results in improvement of coloration of interference colors on the printed surface.

### Use for plastics

In the present invention, when incorporated in plastics, the pigments can be mixed with the resin, either directly or after previously forming of pellets, and then incorporating into various types of molded products by means of extrusion molding, calender molding, blow molding, etc. As the resin component, any of polyolef in-based thermoplastic resins and epoxy-based, polyester-based and polyamide (nylon)-based thermosetting resins can be used. A small amount of pigments can be sufficient to effectively produce the color effects of the pigments of the present invention, e.g., when forming a multi-layered plastic bottle, the external appearance of the bottle can be made to apper effectively by incorporating the pigments in the resin of the outer layer. Especially pigments obtained in the present invention on which an additional plane orientation treatment has been performed (as described above) are preferred for the purpose of improving the coloration. Naturally, it is also possible to use the pigments in the present invention on which a weld-line prevention surface treatment (such as encapsulation etc.) has been performed.

The pigments in the present invention can also be used in combination with other pigments. Examples of such pigments include titanium dioxide; calcium carbonate; clay; talc; barium sulfate; white carbon; chromium oxide; zinc oxide; zinc sulfide; zinc powder; metal powder pigments; iron black; yellow iron oxide; red iron oxide; chrome yellow; carbon black; molybdate orange; Prussian Blue; ultramarine blue; cadmium type pigments; fluorescent pigments; soluble azo dyes; insoluble azo dyes; condensed azo dyes; phthalocyanine pigments; condensed polycyclic pigments; composite oxide pigments; graphite; mica (such as, muscovite, phlogopite, synthetic mica, fluorine tetra silicon mica, etc.), metal oxide coated mica (such as titanium oxide coated mica, titanium dioxide coated mica, (hydrated) iron oxide coated mica, mica coated with iron oxides and titanium oxides, mica coated with lower ordered titanium oxides) ; metal oxide coated graphite (such as titanium dioxide coated graphite, etc.), thin platelet-like alumina; metal oxide coated alumina (such as titanium dioxide coated alumina, iron oxide coated thin platelet-like alumina, Fe₂O₃ coated thin platelet-like alumina, Fe₃O₄ coated thin platelet-like alumina, interference color metal oxide coated thin platelet-like alumina, etc.); MIO; metal oxide coated MIO; metal oxide coated silica flakes and metal oxide coated glass flakes.

### Use for laser marking

The pigments in the present invention can be used in various moldings by kneading them into the above-mentioned plastics not only for design purposes but also for facilitating laserprinting and enhancing its clarity.

### Use for cosmetics

The use of the pigments in the present invention for cosmetics includes make-up cosmetics, hair care products, cosmetic packs, etc. The pigments can be used for example in gel, lipstick, foundation (including emulsion, liquid, oil-type emulsions, etc.), cheek rouge, mascara, nail enamel, eyebrow pencil, eye shadow, eye liner, hair products, etc. Those pigments can be used in a proportion of 1-100 wt%. E.g. , 1 to 50 wt% for foundations, 1-80 wt% for eye shadow, 1-40 wt% for lipstick and 0.1-20 wt% for nail enamel, can be mentioned.

Examples of the mixing component will be given below. Examples of pigments used in combination with the pigments according to the present invention include titanium dioxide; calcium carbonate; clay; talc; barium sulfate; white carbon; chromium oxide; zinc oxide; zinc sulfide; zinc powder; metal powder pigments; iron black; yellow iron oxide; red iron oxide; chrome yellow; carbon black; molybdate orange; Prussian Blue; ultramarine blue; cadmium type pigments; fluorescent pigments; soluble azo dyes; insoluble azo dyes; condensed azo dyes; phthalocyanine pigments; condensed polycyclic pigments; composite oxide pigments; graphite; metal powder pigments; mica (such as, muscovite, phlogopite, synthetic mica, fluorine tetra silicon mica, etc.), metal oxide coated mica (such as titanium oxide coated mica, titanium dioxide coated mica, (hydrated) iron oxide coated mica, mica coated with iron oxides and titanium oxides, mica coated with lower ordered titanium oxides) ; metal oxide coated graphite (such as titanium dioxide coated graphite, etc.), thin platelet-like alumina; metal oxide coated alumina (such as titanium dioxide coated alumina, iron oxide coated thin platelet-like alumina, Fe₂O₃ coated thin platelet-like alumina, Fe₃O₄ coated thin platelet-like alumina, interference color metal oxide coated thin platelet-like alumina, etc.); MIO; metal oxide coated MIO; metal oxide coated silica flakes and metal oxide coated glass flakes, sericite, magnesium carbonate, silica, zeolite, hydroxyapatite, chromium oxide, cobalt titanate, glass beads, nylon beads, silicone beads, etc. Examples of organic pigments include red nos. 2, 3, 102, 104, 105, 106, 201, 202, 203, 204, 205, 206, 207, 208, 213, 214, 215, 218, 219, 220, 221, 223, 225, 226, 227, 228, 230-1, 230-2, 231, 232, 405; yellow nos. 4, 5, 201, 202-1, 202-2, 203, 204, 205, 401, 402, 403, 404, 405, 406, 407; green nos. 3, 201, 202, 204, 205, 401, 402; blue nos. 1, 2, 201, 202, 203, 204, 205, 403, 404; orange nos. 201, 203, 204, 205, 206, 207, 401, 402, 403; brown no. 201; violet nos. 201, 401; black no. 401.

Examples of natural colors include salol yellow, carmine, ß-carotin, hibiscus color, capsaicin, carminic acid, laccaic acid, gurcumin, riboflavin, shikonin, etc.

Further, examples of other components include: oils and fats; surfactants; hydrocarbons such as squalanes, liquid paraffins, palmitic acids, stearic acids, bees wax, myristyl myristate; oil components and other organic solvents such as acetone, toluene, butyl acetate, acetic ester, polyhydric alcohols; waxes; antioxidants; UV absorbers; vitamins; hormones; antiseptic agents; perfumes; etc. By combining the pigments in the present invention with these pigments and components, novel effect colors and functions can be found.

When used in cosmetics, the pigments in the present invention can be used for example in compact cakes, cream, lipstick, etc.; however, they are particularly effective when used in make-up cosmetics, wherein colors are particularly important. Naturally, it is possible to use the pigments in the present invention on which a surface treatment (mentioned above) has been performed beforehand.

### Other uses

The pigments in the present invention can be used by combining them with color toners for copying machines etc.

Hereinafter, the present invention will be described in more detail by reference to the Example and Comparative Example, which, however, are not intended to limit the present invention.

### Example 1

### Preparation of the colored interference pigment having metallic luster with a reddish color (Fe₂O₃/SnO_{2/}[SiO₂/Al(P)])

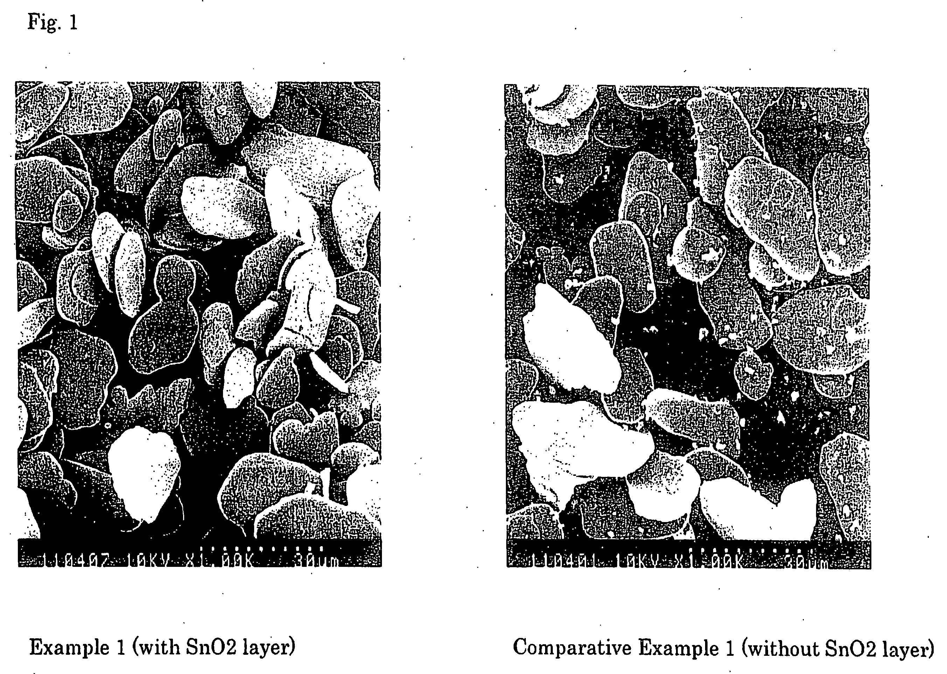

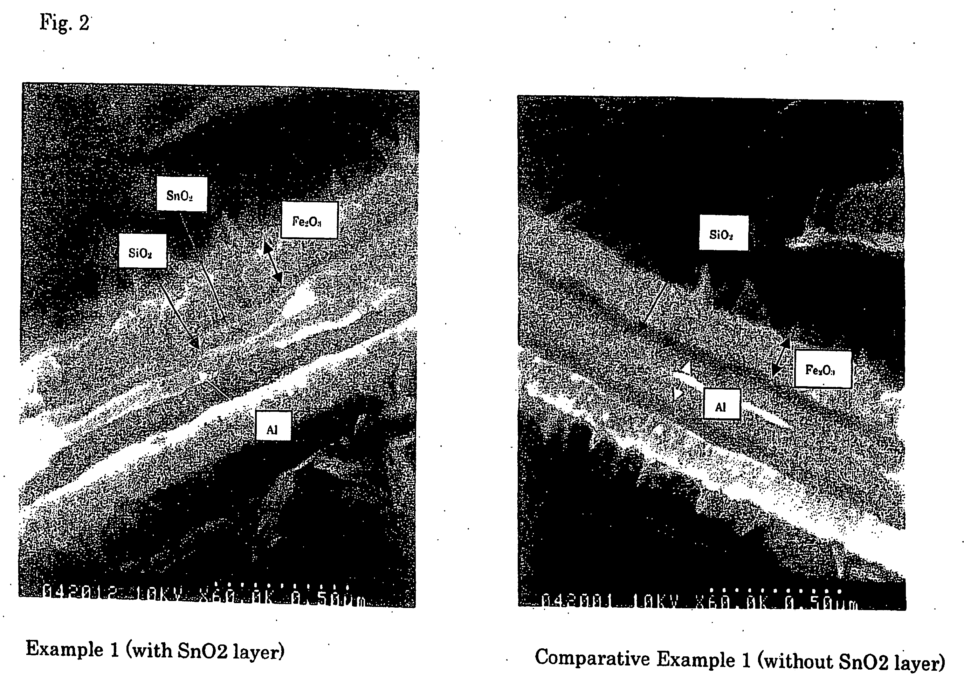

50 g of thin platelet-like metal substrate having a layer of an anti-corrosive treatment ([SiO₂/Al (P)] obtained according to example 4-b in paragraph [0061] of JP, A, 2003-41150, the specific surface area : 3.01 m²/g) are suspended in 1 liter of water. The suspension is heated to 75°C under stirring. 100g of SnCl₄5H₂O solution with a concentration of 29g/l are dropped into the suspension while keeping the pH at 1.8 using 32% by weight aqueous solution of sodium hydroxide (preparation of the first layer, "intermediate binder layer"). Thereafter, the pH is further adjusted to 3.0 using 32wt% sodium hydroxide. Then, 1816g of FeCl₃(III) aqueous solution with a concentration of 30g/l are dropped until the desired hue of color is reached while keeping the pH at 3.0 using 32wt% sodium hydroxide (preparation of the second layer). From the suspension, the solid parts are filtered, washed, dried, and calcined at 350°C for 30 minutes, the colored interference pigments having metallic luster with a reddish color are obtained. The amount of coated hydrated tin oxide is 0.0033g as metal oxide (SnO₂) per unit surface area (m²) of thin plate-like metal substrate having a layer of an anti-corrosive treatment in a non-aqueous system. Also the obtained colored interference pigment having metallic luster with a reddish color have the specific surface area of 25.95 m²/g. SEM observation confirms the existence of high dense and homogeneous coated layer of hydrated iron(III) oxide shown in Fig. 1. The amount of hydrated iron(III) oxide is about 0.18 g as Fe₂O₃ per unit area (m²) of thin plate-like metal substrate having a layer of an anti-corrosive treatment in a non-aqueous system. Cross section by SEM observation, shown in Fig. 2, demonstrates clearly the existence of hydrated tin oxide layer (the intermediate binder layer) having a thickness of about 20 nanometers.

Table 1 shows L value, a value, b value, chromaticity C, and hue angle h. A colored interference pigment having metallic luster with brilliant reddish color having high chromaticity is obtained.

### Comparative example 1

### Preparation of a colored interference pigment having metallic luster (Fe₂O₃/ [SiO₂/Al (P)])

The pigment is obtained by the same procedures as in example 1 except that the process of preparation of the intermediate layer from SnCl₄5H₂O is omitted. Only the hue of an orange color is obtained, while the reddish color is not achieved. SEM observations reveal the existence of inhomogeneous coated layer of Fe₂O₃ with a large amount of non-coated hydrated iron oxide particles shown in Fig. 1. It's specific surface area is 40.67 m²/g.

### Evaluation of coloration

1 weight part of the sample obtained as described in Example 1 above is dispersed in 9 weight parts of acryl-modified nitrocellulose lacquer and coated on a black and white hiding test paper with an applicator (bar coater #20). After drying, the color measurement is performed by using the goniospectrophotometer GCMS-3 (manufactured by Murakami Color Research Laboratory) . The results of the color measurement is shown in Table 1.

Table 1 Result of color measurement by goniospectrophotometer and specific surface area (incidence angle/observation angle is 25/25)

| | | Specific surface area A(m²/g) | Luster (L*) | a* | b* | chromaticity (C) | Hue angle (h) |
|---|---|---|---|---|---|---|---|
| Example 1 | Fe₂O₃/SnO₂/ [SiO₂/Al(P)] | 25.95 | 170.85 | 92.54 | 79.19 | 121.80 | 40.55 |
| Comparative example 1 | Fe₂O)/[SiO₂/ Al(P)] | 40.67 | 167.23 | 68.51 | 78.82 | 104.43 | 49.00 |

Where, chromaticity (C) represents the square root of (a*²+b*²), and hue angle (h) represents Tan⁻¹(b*/a*).

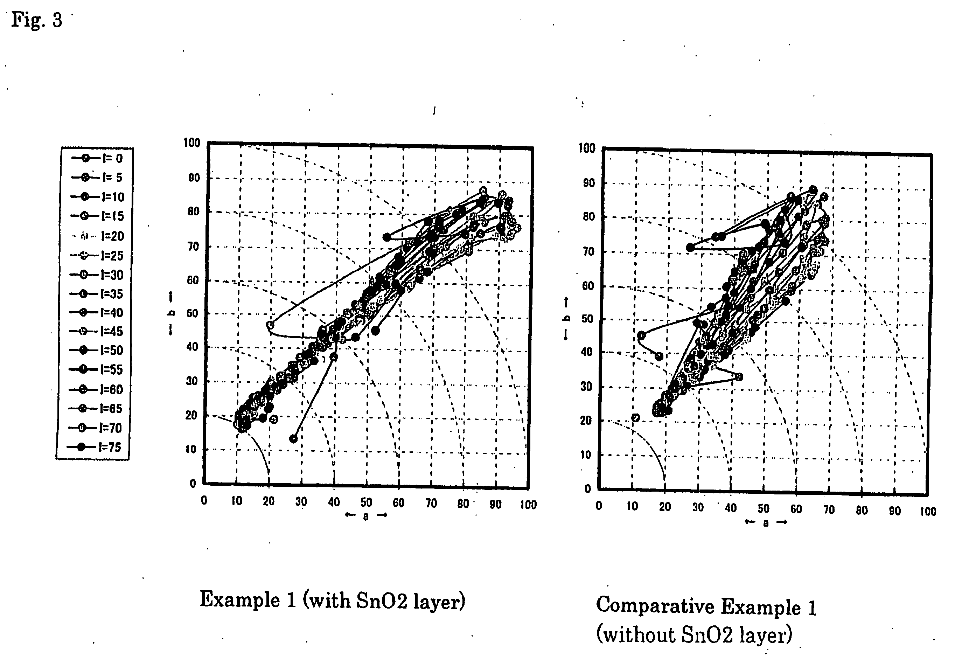

It is demonstrated by the above results that the colored interference pigment having metallic luster with a reddish color obtained by coating with intermediate binder layer (first layer) consisting of hydrated tin oxide according to example 1 of the present invent ion exhibits both high luster and high chromaticity as shown in Fig. 3, compared to the comparative example.

Comparative example 1 which has no intermediate binder layer can not achieve the colored interference pigment having metallic luster with a reddish color having high chromaticity.

Table 1 shows the specific surface areas of example 1 and comparative example 1. As shown in Table 1, one having the intermediate binder layer of hydrated tin oxide as the first layer has a smaller specific surface area and further hydrated iron oxide coated layer has a high density or exhibits denseness and therefore shows good adhesion. Thus, the chromaticity of reddish color has been increased.

### Example 2

### Preparation of the colored interference pigment having metallic luster with a reddish color (Fe₂O₃/SnO₂/[SiO₂/Al (P)])

100 g of thin platelet-like metal substrate having a layer of an anti-corrosive treatment ([SiO₂/Al (P)] obtained according to example 4-b in paragraph [0061] of JP,A,2003-41150, the specific surface area: 3.01 m²/g) are suspended in 2 liter of water. The suspension is heated to 75°C under stirring. 186 ml of SnCl₄5H₂O solution with a concentration of 50g/l are dropped into the suspension while keeping the pH at 1.8 using 20% by weight aqueous solution of sodium carbonate (preparation of the first layer, "intermediate binder layer"). Thereafter, the pH is further adjusted to 3.0 using 20wt% sodium carbonate. Then, 4540g of FeCl₃(III) aqueous solution with a concentration of 87.75g/l are dropped until the desired hue of color is reached while keeping the pH at 3.0 using 20wt% sodium carbonate (preparation of the second layer) . From the suspension, the solid parts are filtered, washed, dried, and calcined at 350°C for 30 minutes, the colored interference pigments having metallic luster with a reddish color having hue angle (h) of 32.52 are obtained. The amount of coated hydrated tin oxide is 0.0133g as metal oxide (SnO₂) per unit surface area (m²) of thinplate-like metal substrate having a layer of an anti-corrosive treatment in a non-aqueous system. Also the obtained colored interference pigment having metallic luster with a reddish color having hue angle (h) of 32.52 has the specific surface area of 29.80 m²/g. SEM observation confirms the existence of high dense and homogeneous coated layer of hydrated iron (III) oxide. The amount of hydrated iron (III) oxide is about 0.76 g as Fe₂O₃ per unit area (m²) of thin plate-like metal substrate having a layer of an anti-corrosive treatment in a non-aqueous system.

Fig. 1 shows a comparison of SEM observation of Fe₂O₃/SnO₂/[SiO₂/Al (P)] obtained in Example 1 and Fe₂O₃/ [SiO₂/Al (P)] obtained in Comparative Example 1.

Fig. 2 shows a comparison of cross section by SEM observation of Fe₂O₃/SnO₂/[SiO₂/Al (P)] obtained in Example 1 and Fe₂O₃/[SiO₂/Al(P)] obtained in Comparative Example 1,

Fig. 3 shows a comparison of color measurements of Fe₂O₃/SnO₂/ [SiO₂/Al (P)] obtained in Example 1 and Fe₂O_{3/} [SiO₂/Al (P)] obtained in Comparative Example 1 byGoniospectrophotometer under different values of incident angle and observation angle. A Murakami Goniospectrometer GC MS-3 is used. The observation angle (R) is measured from 0° to 75° in steps of 5°. The incident angle (I) is indicated in the figure.

Hereafter specific examples for the use will be shown. (Use example 1) Use examples for paint Paint based on pearlescent pigments:

**(Composition A)**

| | |
|---|---|
| Acrydic 47-712 | 70 weight parts |
| Super Beckamine G821-60 | 30 weight parts |
| (Composition B) | |
| Sample of example 1 | 10 weight parts |
| Pearl-luster pigment | 10 weight parts |
| (Composition C) | |
| Ethyl acetate | 50 weight parts |
| Toluene | 30 weight parts |
| n-butanol | 10 weight parts |
| Solvesso #150 | 40 weight parts |

100 weight parts of Composition A are mixed with 20 weight parts of CompositionB, the resulting mixture is diluted to obtain a viscosity (12 to 15 seconds with Ford Cup #4) suitable for spray-coating with Composition C, and is spray-coated to form a basecoat layer.

**Clear paint:**

| | |
|---|---|
| Acrydic 44-179 | 14 weight parts |
| Super Beckamine L117-60 | 6 weight parts |
| Toluene | 4 weight parts |
| MIBK (Methyl isobutyl ketone) | 4 weight parts |
| Butyl cellosolve | 3 weight parts |

This composition is coated on the above pearlescent base coating, dried at 40 °C for 30 minutes, air-dried at room temperature and baked (at 130 °C for 30 minutes). The obtained paint filmexhibits the interference color having metallic luster with brilliant reddish color having high chromaticity.

### Use example. 2

**Use example for plastic:**

| | |
|---|---|
| High density polyethylene (pellets) | 100 weight parts |
| Sample of example 1 | 1 weight part |
| Magnesium stearate | 0.1 weight parts |
| Zinc stearate | 0.1 weight parts |

These components are dry-blended and formed by injection molding.

The molding containing a sample of example 1 exhibits the interference color having metallic luster with brilliant reddish color.

### Use example 3

**Use example for ink:**

| | |
|---|---|
| CCST medium (nitrocellulose resin) | 10 weight parts |
| Sample of example 1 | 8 weight parts |

The solvent NC 102 is added to the ink composition blended from the above components, and ink with a viscosity of 20 seconds with Zahn Cup No. 3 is prepared. Prints obtained with this ink containing a sample of example 1 exhibits the interference color having metallic luster with brilliant reddish color.

### Use example 4

### Use example for cosmetics

**Use example for compact powder:**

| | |
|---|---|
| Talc | 50 weight parts |
| Sample of example 1 | 25 weight parts |
| Color pigments | 5 weight parts |
| Isopropyl myristate | a suitable amount |
| Magnesium stearate | 2 weight parts |

**Formulation for foundation:**

| | |
|---|---|
| Talc | 38 weight parts |
| Sample of example 1 | 25 weight parts |
| Mica (8 *µ*m) | 10 weight parts |
| Magnesium stearate | 3 weight parts |
| Nylon powder 12 | 8 weight parts |
| Yellow iron oxide | 1.9 weight parts |
| Red iron oxide | 0.8 weight parts |
| Titanium oxide | 1.0 weight part |
| Mineral oil (oil component) | a suitable amount |
| (caprylic acid, capric acid) triglyceride (oil component) | |
| | 3.3 weight parts |
| Butylparaben | 0.1 weight parts |

### [Industrial Applicability]

The colored interference pigment having metallic luster of the present invention is one in which thin platelet-like metal substrate having a layer of an anti-corrosive treatment in a non-aqueous system is coated with an intermediate binder layer thereon to improve the adhesion and denseness of the hydrated iron oxide coated layer formed further outside thereof so that the interference colored pigment having metallic luster achieves a reddish color with high luster and high coloration. Therefore, it can be used in paints, inks, plastics, cosmetics, and others which exhibit a reddish color.

## Claims

1. Colored interference pigments having metallic luster comprising, on the surface of a thin platelet-like metal substrate, a layer of an anti-corrosive treatment in a non-aqueous system, and, thereon,
(1) an intermediate binder layer comprising hydrated tin oxide (first layer) obtained by the hydrolysis of a water soluble tin salt; and thereon,
(2) a hydrated iron oxide layer (second layer,
wherein the layer of an anti-corrosive treatment in a non-aqueous system is a hydrated metal oxide layer obtained from the following steps: Treating the surface of the thin platelet-like metal substrate with phosphoric acids compounds and/or boric acids compounds, followed by coating one or more hydrated metal oxide layers of one or more metals selected from the group consisting of silicon, aluminum, zirconium and titanium by the sol-gel method.

2. Colored interference pigments having metallic luster according to claim 1, wherein the metals of the hydrated metal oxide in said hydrated metal oxide layer are silicon and/or aluminum.

3. Colored interference pigments having metallic luster according to claim 2, wherein the metal of the hydrated metal oxide in said hydrated metal oxide layer is silicon.

4. Colored interference pigments having metallic luster according to any one of claims 1 to 3, wherein the amount of hydrated tin oxide in the intermediate binder layer (the first layer) is not less than the amount which is necessary to form a monolayer of hydrated tin oxide on the thin platelet-like metal substrate having a layer of an anti-corrosive treatment in a non-aqueous system.

5. Colored interference pigments having metallic luster according to any one of claims 1 to 4, wherein the amount of hydrated tin oxide in the intermediate binder layer (the first layer) is 0.0008g to 0.3g as metal oxide (SnO₂) per unit surface area (m²) of the thin platelet-like metal substrate having a layer of an anti-corrosive treatment in a non-aqueous system.

6. Colored interference pigments having metallic luster according to any one of claims 1 to 5, wherein the amount of hydrated iron oxide in the hydrated iron oxide coated layer (the second layer) is 0.01g to 1.0g as metal oxide (Fe₂O₃) per unit surface area (m²) of the thin platelet-like metal substrate having a layer of an anti-corrosive treatment in a non-aqueous system.

7. Method for preparing colored interference pigments having metallic luster according to any one of claims 1 to 6, comprising the following steps:
- Dispersing/suspending thin platelet-like metal substrate particles having a layer of an anti-corrosive treatment in a non-aqueous system in water,
- Adding simultaneously an aqueous solution of a water soluble tin salt and a basic aqueous solution to the dispersion/suspension while keeping the pH value constant and forming a first layer of a hydrated tin oxide (an intermediate binder layer) on the surface of said thin platelet-like metal substrate having a layer of an anti-corrosive treatment in a non-aqueous system; and further,
- Adding simultaneously an aqueous solution of an iron (III) salt and a basic aqueous solution while keeping the pH value constant and forming a hydrated iron oxide layer (the second layer).

8. A composition of resin/oil and pigment comprising a resin component, and/or an oil component, and the colored interference pigments having metallic luster according to any one of claims 1 to 6.

9. Composition of resin/oil and pigment according to claim 8, comprising additively further pigments.

10. Use of the composition of resin/oil and pigment according to claim 8 or 9 in paints, coated films, painted materials, inks, printed materials, plastics, moldings, or cosmetics.

11. Painted material having at least one painted layer comprising the composition of resin/oil and pigment according to claim 8 or 9.

## Patentansprüche

1. Farbige Interferenzpigmente mit Metallglanz umfassend, auf der Oberfläche eines dünnen plättchenartigen Metallsubstrats, eine Schicht aus einer Korrosionsschutzbehandlung in einem nichtwässrigen System und auf dieser
(1) eine Bindemittel-Zwischenschicht enthaltend Zinnoxidhydrat (erste Schicht), erhalten durch Hydrolyse eines wasserlöslichen Zinnsalzes, und auf dieser
(2) eine Eisenoxidhydratschicht (zweite Schicht),
wobei es sich bei der Schicht aus einer Korrosionsschutzbehandlung in einem nichtwässrigen System um eine Metalloxidhydratschicht handelt, die durch die folgenden Schritte erhalten wurde: Behandeln der Oberfläche des dünnen plättchenartigen Metallsubstrats mit Phosphorsäureverbindungen und/oder Borsäureverbindungen, gefolgt durch Auftragen einer oder mehrerer Metalloxidhydratschichten eines oder mehrerer Metalle, die aus der Gruppe bestehend aus Silizium, Aluminium, Zirconium und Titan ausgewählt sind, mittels des Sol-Gel-Verfahrens.

2. Farbige Interferenzpigmente mit Metallglanz nach Anspruch 1, wobei es sich bei den Metallen des Metalloxidhydrats in der Metalloxidhydratschicht um Silizium und/oder Aluminium handelt.

3. Farbige Interferenzpigmente mit Metallglanz nach Anspruch 2, wobei es sich bei dem Metall des Metalloxidhydrats in der Metalloxidhydratschicht um Silizium handelt.

4. Farbige Interferenzpigmente mit Metallglanz nach einem beliebigen der Ansprüche 1 bis 3, wobei die Menge an Zinnoxidhydrat in der Bindemittel-Zwischenschicht (der ersten Schicht) nicht geringer ist als die Menge, die erforderlich ist, um auf dem dünnen plättchenartigen Metallsubstrat mit einer Schicht aus einer Korrosionsschutzbehandlung in einem nichtwässrigen System eine Monoschicht aus Zinnoxidhydrat zu bilden.

5. Farbige Interferenzpigmente mit Metallglanz nach einem beliebigen der Ansprüche 1 bis 4, wobei die Menge des Zinnoxidhydrats in der Bindemittel-Zwischenschicht (der ersten Schicht) 0,0008 g bis 0,3 g als Metalloxid (SnO₂) pro Flächeneinheit (m²) des dünnen plättchenartigen Metallsubstrats mit einer Schicht aus einer Korrosionsschutzbehandlung in einem nichtwässrigen System beträgt.

6. Farbige Interferenzpigmente mit Metallglanz nach einem beliebigen der Ansprüche 1 bis 5, wobei die Menge des Eisenoxidhydrats in der aufgetragenen Eisenoxidhydratschicht (der zweiten Schicht) 0,01 g bis 1,0 g als Metalloxid (Fe₂O₃) pro Flächeneinheit (m²) des dünnen plättchenartigen Metallsubstrats mit einer Schicht aus einer Korrosionsschutzbehandlung in einem nichtwässrigen System beträgt.

7. Verfahren zur Herstellung farbiger Interferenzpigmente mit Metallglanz nach einem beliebigen der Ansprüche 1 bis 6, umfassend die folgenden Schritte:
- Dispergieren/Suspendieren von dünnen plättchenartigen Metallsubstratteilchen mit einer Schicht aus einer Korrosionsschutzbehandlung in einem nichtwässrigen System in Wasser,
- gleichzeitiges Zugeben einer wässrigen Lösung eines wasserlöslichen Zinnsalzes und einer basischen wässrigen Lösung zu der Dispersion/Suspension, wobei man den pH-Wert konstant hält, und Bilden einer ersten Schicht eines Zinnoxidhydrats (einer Bindemittel-Zwischenschicht) auf der Oberfläche des dünnen plättchenartigen Metallsubstrats mit einer Schicht aus einer Korrosionsschutzbehandlung in einem nichtwässrigen System; und weiter
- gleichzeitiges Zugeben einer wässrigen Lösung eines Eisen(III)-Salzes und einer basischen wässrigen Lösung, wobei man den pH-Wert konstant hält, und Bilden einer Eisenoxidhydratschicht (der zweiten Schicht).

8. Zusammensetzung aus Harz/Öl und Pigment enthaltend eine Harzkomponente und/oder eine Ölkomponente und die farbigen Interferenzpigmente mit Metallglanz nach einem beliebigen der Ansprüche 1 bis 6.

9. Zusammensetzung aus Harz/Öl und Pigment nach Anspruch 8, enthaltend zusätzlich weitere Pigmente.

10. Verwendung der Zusammensetzung aus Harz/Öl und Pigment nach Anspruch 8 oder 9 in Lacken, beschichteten Filmen, lackierten Materialien, Druckfarben, bedruckten Materialien, Kunststoffen, Formkörpern oder Kosmetika.

11. Lackiertes Material mit mindestens einer Lackschicht enthaltend die Zusammensetzung aus Harz/Öl und Pigment nach Anspruch 8 oder 9.

## Revendications

1. Pigments d'interférence colorés présentant un lustre métallique comprenant, sur la surface d'un substrat en métal sous forme de plaquettes minces, une couche d'un traitement anticorrosion dans un système non aqueux, et, dessus,
(1) une couche d'agent de liaison intermédiaire comprenant de l'oxyde d'étain hydraté (première couche) obtenu au moyen de l'hydrolyse d'un sel d'étain soluble dans l'eau ; et dessus,
(2) une couche d'oxyde de fer hydraté (seconde couche), dans lesquels :
la couche d'un traitement anticorrosion dans un système non aqueux est une couche d'oxyde de métal hydraté obtenue à partir des étapes qui suivent : traitement de la surface du substrat en métal sous forme de plaquettes minces avec des composés d'acides phosphoriques et/ou des composés d'acides boriques, suivi par le dépôt par revêtement d'une ou de plusieurs couche(s) d'oxyde de métal hydraté constituée(s) par un métal ou plusieurs métaux choisi(s) parmi le groupe comprenant silicium, aluminium, zirconium et titane au moyen du procédé sol-gel.

2. Pigments d'interférence colorés présentant un lustre métallique selon la revendication 1, dans lesquels les métaux de l'oxyde de métal hydraté dans ladite couche d'oxyde de métal hydraté sont le silicium et/ou l'aluminium.

3. Pigments d'interférence colorés présentant un lustre métallique selon la revendication 2, dans lesquels le métal de l'oxyde de métal hydraté dans ladite couche d'oxyde de métal hydraté est le silicium.

4. Pigments d'interférence colorés présentant un lustre métallique selon l'une quelconque des revendications 1 à 3, dans lesquels la quantité d'oxyde d'étain hydraté dans la couche d'agent de liaison intermédiaire (la première couche) n'est pas inférieure à la quantité qui est nécessaire pour former une monocouche en oxyde d'étain hydraté sur le substrat en métal sous forme de plaquettes minces comportant une couche d'un traitement anticorrosion dans un système non aqueux.

5. Pigments d'interférence colorés présentant un lustre métallique selon l'une quelconque des revendications 1 à 4, dans lesquels la quantité d'oxyde d'étain hydraté dans la couche d'agent de liaison intermédiaire (la première couche) est de 0,0008 g à 0,3 g en tant qu'oxyde de métal (SnO₂) par aire de surface unitaire (m²) du substrat en métal sous forme de plaquettes minces comportant une couche d'un traitement anticorrosion dans un système non aqueux.

6. Pigments d'interférence colorés présentant un lustre métallique selon l'une quelconque des revendications 1 à 5, dans lesquels la quantité d'oxyde de fer hydraté dans la couche d'oxyde de fer hydraté déposée par revêtement (la seconde couche) est de 0,01 g à 1,0 g en tant qu'oxyde de métal (Fe₂O₃) par aire de surface unitaire (m²) du substrat en métal sous forme de plaquettes minces comportant une couche d'un traitement anticorrosion dans un système non aqueux.

7. Procédé pour préparer des pigments d'interférence colorés présentant un lustre métallique selon l'une quelconque des revendications 1 à 6, comprenant les étapes qui suivant :
- dispersion/suspension de particules de substrat en métal sous forme de plaquettes minces comportant une couche d'un traitement anticorrosion dans un système non aqueux dans l'eau,
- addition simultanément d'une solution aqueuse d'un sel d'étain soluble à l'eau et d'une solution aqueuse basique à la dispersion/suspension tout en maintenant la valeur du pH constante et en formant une première couche d'un oxyde d'étain hydraté (une couche d'agent de liaison intermédiaire) sur la surface dudit substrat en métal sous forme de plaquettes minces comportant une couche d'un traitement anticorrosion dans un système non aqueux; et en outre,
- addition simultanément d'une solution aqueuse d'un sel de fer (III) et d'une solution aqueuse basique tout en maintenant la valeur du pH constante et en formant une couche d'oxyde de fer hydraté (la seconde couche).

8. Composition constituée par une résine/de l'huile et par un pigment comprenant un composant de résine, et/ou un composant d'huile, et les pigments d'interférence colorés présentant un lustre métallique selon l'une quelconque des revendications 1 à 6.

9. Composition constituée par une résine/de l'huile et par un pigment selon la revendication 8, comprenant de façon additionnelle d'autres pigments.

10. Utilisation de la composition de résine/huile et par un pigment selon la revendication 8 ou 9 dans des peintures, des films déposés par revêtement, des matériaux peints, des encres, des matériaux imprimés, des matières plastiques, des moulages ou des cosmétiques.

11. Matériau peint comportant au moins une couche peinte comprenant la composition de résine/huile et par un pigment selon la revendication 8 ou 9.
